# EUROPEAN PATENT SPECIFICATION

(11) **EP 2 664 170 B1**
(45) Date of publication and mention of the grant of the patent: **17.05.2017**
(21) Application number: 12700281.4
(22) Date of filing: 12.01.2012
(51) Int. Cl.: H04W 8/30, H04W 8/04, H04W 60/04

(54) **INFORMING A MME ABOUT A HLR RESTART VIA THE S6A INTERFACE**
BENACHRICHTIGUNG EINES MME ÜBER EINEN HLR-NEUSTART ÜBER DIE S6A-SCHNITTSTELLE
INFORMER UNE MME DU REDÉMARRAGE D'UN HLR VIA L'INTERFACE S6A

(30) Priority: 14.01.2011 US 201161432654 P
(43) Date of publication of application: 20.11.2013
(73) Proprietor: Telefonaktiebolaget LM Ericsson (publ), 164 83 Stockholm (SE)
(72) Inventor: OLSSON, Lars-Bertil, S-42448 Angered (SE); RAMLE, Peter, S-43531 Mölnlycke (SE); YANG, Yong, S-43147 Mölndal (SE)
(74) Representative: Ericsson
(86) International application number: PCT/EP2012/050441
(87) International publication number: WO 2012/095492

(56) References cited:
- ERICSSON ET AL: "3GPP TSG CT WG1 Meeting #67; C1-103756; VLR behaviour at HLR failure", 3GPP DRAFT; C1-103756_HLR_FAILURE_DP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Barcelona; 20101011, 4 October 2010 (2010-10-04), pages 1-2, XP050444469, [retrieved on 2010-10-04]
- ERICSSON: "3GPP TSG CT4 Meeting #51bis; C4-110023; HLR failure", 3GPP DRAFT; C4-110023_HLR_FAILURE_DISC_PA2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Ljubljana; 20110124, 14 January 2011 (2011-01-14), page 1, XP050483837, [retrieved on 2011-01-14]
- 3GPP TS 29.118 V10.2.0 (2010-12): "3rd Generation Partnership Project; Technical Specification Group Core Network and Terminals; Mobility Management Entity (MME) â Visitor Location Register (VLR) SGs interface specification (Release 10)", 3GPP STANDARD; 3GPP TS 29.118, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.0, 19 December 2010 (2010-12-19) , pages 1-59, XP050462323, [retrieved on 2010-12-19]
- 3GPP TS 29.018 V10.1.0 (2010-12): "3rd Generation Partnership Project; Technical Specification Group Core Network and Terminals; General Packet Radio Service (GPRS); Serving GPRS Support Node (SGSN) - Visitors Location Register (VLR); Gs interface layer 3 specification (Release 10)", 3GPP STANDARD; 3GPP TS 29.018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 19 December 2010 (2010-12-19) , pages 1-58, XP050462320, [retrieved on 2010-12-19]
- ETSI TS 123 007 V9.6.0 (2011-01): "Digital cellular telecommunications system (Phase 2+); Universal Mobile Telecommunications System (UMTS); Restoration procedures (3GPP TS 23.007 version 9.6.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP CT 4, no. V9.6.0, 1 January 2011 (2011-01-01), pages 1-41, XP014061875,
- 3GPP TS 23.272 V10.2.1 (2011-01): "3rd Generation Partnership Project; Technical Specification Group Services and System Aspects; Circuit Switched (CS) fallback in Evolved Packet System (EPS); Stage 2 (Release 10)", 3GPP STANDARD; 3GPP TS 23.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.1, 4 January 2011 (2011-01-04), pages 1-79, XP050462516, [retrieved on 2011-01-04]
- 3GPP TS 29.272 V10.1.0 (2010-12): "3rd Generation Partnership Project; Technical Specification Group Core Network and Terminals; Evolved Packet System (EPS); Mobility Management Entity (MME) and Serving GPRS Support Node (SGSN) related interfaces based on Diameter protocol (Release 10)", 3GPP STANDARD; 3GPP TS 29.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 17 December 2010 (2010-12-17) , pages 1-92, XP050462258, [retrieved on 2010-12-17]

## Description

### TECHNICAL FIELD

Embodiments herein relate generally to improved utilization of radio resources and HLR reset signalling via the s6a interface in the Evolved Packet System (EPS) in particular.

### BACKGROUND

In a typical cellular system, also referred to as a wireless communications network, communication network, network or system, wireless terminals, also known as mobile stations and/or User Equipment units (UEs) communicate via Radio Access Networks (RAN) to a core network (CN). The network covers a geographical area which is divided into cell areas, with each cell area being served by a base station, e.g. a Radio Base Station (RBS), which in some networks is also called eNodeB (eNB), NodeB, B node or base station. The base stations communicate over the air interface operating on radio frequencies with the user equipments within range of the base stations.

A user equipment may be any suitable communication device or computational device with communication capabilities capable to communicate with a base station over a radio channel, for instance but not limited to mobile phone, smart phone, personal digital assistant (PDA), laptop, MP3 player or portable DVD player (or similar media content devices), digital camera, or even stationary devices such as a PC. A PC may also be connected via a mobile station as the end station of the broadcasted/multicasted media. The user equipment may also be an embedded communication device in e.g. electronic photo frames, cardiac surveillance equipment, intrusion or other surveillance equipment, weather data monitoring systems, vehicle, car or transport communication equipment, etc. The user equipment is referred to as UE in some of the figures.

A communication network ties a number of computers, terminals and wireless devices together for exchange of information. These computers, terminals and wireless devices are also called nodes of the network.

It should be noted that the communication link between the base station and the network may be of any suitable kind comprising either a wired or wireless link. The link may use any suitable protocol depending on type and level of layer, e.g. as indicated by the Open Systems Interconnection (OSI) model, as understood by the person skilled in the art.

Evolved Packet System (EPS) is a communication network developed within 3GPP, and which comprises a radio access system and a core network. The radio network is referred to as evolved UMTS terrestrial radio access network (E-UTRAN) and the packet switched core network is referred to as evolved packet core (EPC).

A UE 101 may start to interact with an evolved packet core (EPC) enabled network by executing an E-UTRAN Attach procedure. In E-UTRAN the attach procedure comprises setup of a packet data network (PDN) connection which results in an activated default bearer.

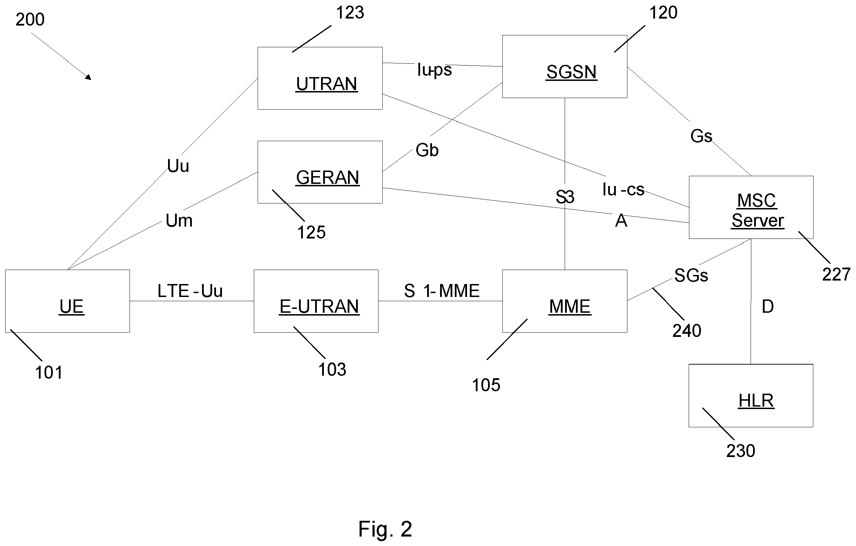

Long Term Evolution (LTE) technology supports packet based services only; however 3GPP specifies fallback for circuit switched (CS) services as well. In LTE, the circuit switched fallback in EPS enables the provisioning of voice and traditional CS-domain services. To provide these services LTE reuses CS infrastructure when the UE 101 is served by E-UTRAN 103. A CS fallback enabled terminal, connected to E-UTRAN 103 may use GERAN 123 or UTRAN 125 to connect to the CS domain. Figure 2 illustrates embodiments of an EPS architecture 200 for CS fallback and Short Message Service (SMS) over an SGs interface. The SGs interface is the reference point between the MME 105 and Mobile Service Centre (MSC) server 227. The SGs interface is used for the mobility management and paging procedures between EPS and CS domain, and is based on the Gs interface procedures.

As part of the attach procedure the MME 105 may perform location updating of the UE 101 towards the MSC Server 227.

A location updating by the MSC Server 227 registers the UE 101 at a Home Location Register (HLR) 230. The registration at the HLR 230 makes it possible for the network to reach the UE 101 for mobile terminating SMS and/or mobile terminating voice calls.

Recovery after HLR restart in legacy GERAN or UTRAN will be discussed below:
3GPP TS 29.018, V10.1.0 in sections 7 and 13 describes thatAn HLR 230 that is restarted does no longer know which UEs 101 that previously were registered and to enable use of mobile terminating SMS and/or mobile terminating voice call the UEs 101 must once again become registered. Until the UE 101 has been re-registered the UE 101 is unreachable for mobile terminating services
.

MSC Server 227 and SGSN 120 become aware of an HLR restart when respective node receives the HLR reset indication sent by the HLR 230 after it has been restarted.

In use of legacy combined procedures the HLR 230 is directly connected also to the SGSN 120. When the SGSN 120 receives an HLR reset indication the SGSN 120 set the internal flag Non-GPRS Alert Flag (NGAF) for each impacted UE 101. At next UE 101 signaling event for a UE 101 where the flag NGAF is set, the SGSN 120 sends a Base Station System Application Part (BSSAP)+-ACTIVITY-INDICATION message to the MSC Server 227.

Recovery after HSS restart in EPS will now be discussed below.
3GPP TS 29.118, V10.2.0 in sections 5.3 and 5.9 describes that an An HSS 108 that is restarted does no longer know which UEs 101 that previously were registered and to enable use of mobile terminating SMS and/or mobile terminating voice call the UEs 101 must once again become registered. Until the UE 101 has been re-registered the UE 101 is unreachable for mobile terminating services.

MME 105 becomes aware of an HSS restart when it receives an HSS reset indication sent by the HSS 108 after it has restarted.

With use of combined procedures in EPS, an MME 105 that receives an HSS reset indication will cause the MME 105 to set a node internal flag NEAF for each impacted UE 101. At next UE signaling event for a UE 101 where the NEAF is set, the MME 105 sends a SGsAP-UE-ACTIVITY-INDICATION to the MSC Server 227. This is used to trigger the MSC Server 227 to perform a location update towards the HLR 230 in order to restore the HLR data.

Recovery after HLR restart in EPS will now be discussed below.

An HLR 230 that is restarted does no longer know which UEs 101 that previously were registered and to enable use of mobile terminating SMS and/or mobile terminating voice call the UEs 101 must once again become registered. Until the UE 101 has been re-registered the UE 101 is unreachable for mobile terminating services.

MSC Server 227 becomes aware of an HLR restart when it receives an HLR reset indication sent by the HLR 230 after it has restarted.

The MME 105 is not connected to the HLR 230 and does not become aware of an HLR restart.

With use of combined procedures in EPS, as described in 3GPP C1-103756, an MSC Server 227 that receives an HLR reset indication may signal the message SGsAP-RESET-INDICATION to trigger the MME 105 to set an internal flag VLR Reliable = False for each impacted UE 101. At next UE signaling event for a UE 101 where VLR Reliable = False, the MME 105 performs a location update, possibly preceded by an IMSI-detach to trigger the UE 101 to perform the combined RAU procedure, with IMSI attach.

By sending the message SGsAP-RESET-INDICATION, the MSC Server 227 request the MME 105 to restore all UE associations regardless if only a fraction of the UEs 101 registered at the MSC Server 227 at the time of an HLR restart were impacted. This results in unnecessary signaling.

As an alternative an MSC Server 227 that receives an HLR reset indication may signal the message SGsAP-ALERT-REQUEST, one for each and every impacted UE 101, to trigger the MME 105 to set an internal flag, non-EPS alert flag, NEAF for each impacted UE 105. At next UE signaling event for a UE 101 where the NEAF is set, the MME 105 sends an SGsAP-UE-ACTIVITY-INDICATION to the MSC Server 227. This is used to trigger the MSC Server 227 to perform a location update towards the HLR 230 in order to restore the HLR data. The sending of SGsAP-ALERT-REQUEST for each and every impacted UE 101 causes a massive signaling load.

### SUMMARY

The objective of embodiments herein is therefore to obviate at least one of the above disadvantages and to provide improved utilization of radio resources in a communication network.

This is provided in a number of aspects in which a first is a mobility management entity, MME, in a telecommunications network. The MME comprises a processing unit, a receiving unit, a transmitting unit, and a memory unit. The processing unit is arranged to execute instruction sets stored in the memory unit for receiving on the receiving unit from a Home Subscriber Server, HSS, a message comprising an identity of a reset home location register, HLR. Comparing the HLR identity with an in the memory unit saved list of HLR identities saved for user equipment, UE, and associated with a respective mobile service center, MSC, server. Setting a flag for user equipment associated with the reset HLR, the flag indicating an alert. Receiving a UE signaling event for a UE with the flag set. Sending in the transmitting unit an SGs application Part message to the respective MSC server to indicate that activity from the UE has been detected. The flag may be for instance a non-EPS alert flag, NEAF.

The received message is received in relation to an HLR reset indication. The transmitting of the HRL identity is performed over an S6a interface.

The processing unit of the MME may further be arranged to send an update location request to a Home subscriber server, HSS, receive a HLR identity from the HSS, and save the HLR identity as part of a UE context.

Another aspect of the present invention is provided, a method for providing improved utilization of radio resources in a telecommunications network. The method comprises steps of receiving on the receiving unit from a Home Subscriber Server, HSS, and over an S6a interface, a message comprising an identity of a reset home location register, HLR, wherein the received message is received in relation to an HLR reset indication. Comparing the HLR identity with an in a memory unit saved list of HLR identities saved for user equipment, UE, and associated with a respective mobile service center, MSC, server. Setting a flag for user equipment associated with the reset HLR, the flag indicating an alert. Receiving a UE signaling event for a UE with the flag set. Sending an SGs application Part message to the respective MSC server to indicate that activity from the UE has been detected.

Yet another aspect of the present invention is provided, a Home Subscriber Server, HSS, in a telecommunications network. The HSS comprises a processing unit, a receiving unit, and a transmitting unit. The processing unit is arranged to execute instruction sets to receive on the receiving unit from a reset Home Location Register, HLR, a message comprising an indication of an HLR reset. Send, over a S6a interface, using the transmitting unit one message to each impacted mobility management entity, MME, with an in the memory unit saved list of HLR identities saved for user equipment, UE, and wherein the message comprises an identity of the reset HLR associated with the UE. Wherein the processing unit is further arranged to in response to an update location request from an MME provide an HLR identity associated with a User Equipment, UE.

The processing unit of the HSS is further arranged to in response to an update location request from an MME provide an HLR identity. The HLR identity may be a mobile subscriber identity, IMSI, associated with a user equipment, UE.

Furthermore, another aspect of the present invention is provided, a method in a Home subscriber server, HSS, in a telecommunications network. The method comprises steps of receiving with a receiving unit from a reset Home Location Register, HLR, a message comprising an indication of an HLR reset. Sending, over a S6a interface, one message to each impacted mobility management entity, MME, with an in the memory unit saved list of HLR identities saved for user equipment, UE, and wherein the message comprises an identity of the reset HLR associated with the UE. Receiving an update location request from an MME and in response providing an HLR identity associated with a User Equipment, UE.

Embodiments herein afford many advantages, for which a non-exhaustive list of examples follows:
The embodiments herein provide an advantage of substantially lowered signaling at an HLR restart. There will be only one message from the HSS to each MME where impacted UEs are registered instead of one message per impacted UE. The internal handling in the MME from a received HLR Reset with an HLR identity would be almost the same as the MME handling of a received HSS Reset, hence a low implementation impact to the MME.

The embodiments herein are not limited to the features and advantages mentioned above. A person skilled in the art will recognize additional features and advantages upon reading the following detailed description.

### BRIEF DESCRIPTION OF THE DRAWINGS

The embodiments will now be further described in more detail in the following detailed description by reference to the appended drawings in which:
- Fig. 1: is a block diagram illustrating embodiments of a communication network.
- Fig. 2: is a block diagram illustrating embodiments of an EPS architecture for CS fallback and SMS over SGs.
- Fig. 3: is a combined signaling diagram and flowchart illustrating embodiments of a method in a communication network.
- Fig. 4: is a combined signaling diagram and flowchart illustrating embodiments of a method in a communication network.
- Fig. 5: is a block diagram illustrating embodiments of a first network node.
- Fig. 6: is a block diagram illustrating embodiments of a second network node.

The drawings are not necessarily to scale and the dimensions of certain features may have been exaggerated for the sake of clarity, emphasize is instead being placed upon illustrating the principle of the embodiments herein.

### DETAILED DESCRIPTION

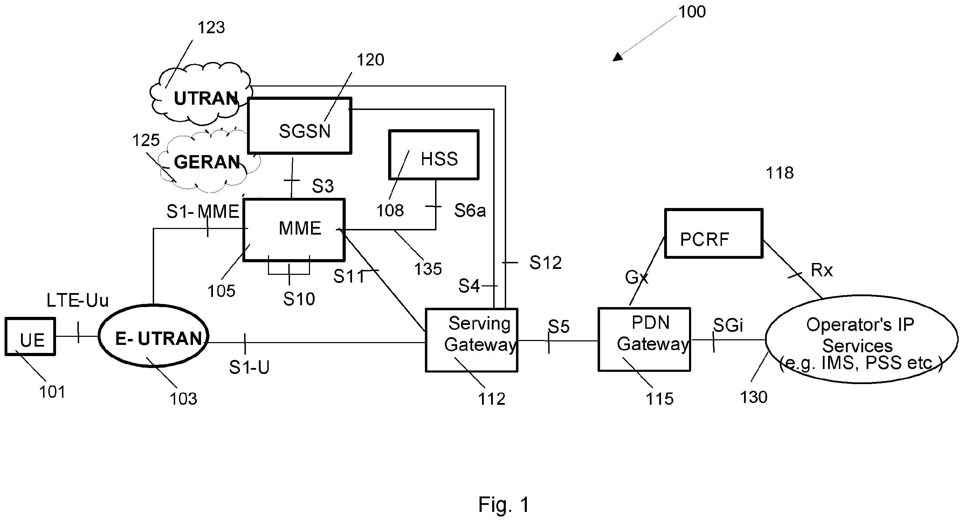

Figure 1 depicts an embodiment of a communication network 100 illustrating a non-roaming architecture for the EPS. The network 100 comprises network nodes. Some of the network nodes comprised in the network 100 will be described below.

A User Equipment (UE) 101 may interact with the EPS using an E-UTRAN 103 radio access via an LTE-Uu interface. UE-related control signaling is handled by a Mobility Management Entity (MME) 105 connected to the E-UTRAN and with support of subscription information provided by a Home Subscriber Server (HSS) 108 connected to the MME via an S6a interface 135. User payload is handled by a Serving Gateway (S-GW) 112 and a PDN Gateway (P-GW) 115. The S-GW is connected to the E-UTRAN and the MME via S1-U and S11 interfaces respectively. The P-GW is connected to the S-GW via an S5 interface and may interact with a Policy and Charging Rules Function (PCRF) 118 via a Gx interface. A Serving GPRS Support Node (SGSN) 120 handles all packet switched data within the network 100 and may be connected to the MME and S-GW via S3 and S12 interfaces respectively. The SGSN 120 provides connections for GERAN 123 and UTRAN 125 networks. Furthermore, the PDN gateway and PCRF may be connected to an Operators IP Services 130, such as for instance IP Multimedia Subsystem (IMS), Transparent end-to-end Packet-switched Streaming Service (PSS), and so on via SGi and Rx interfaces respectively.

A UE 101 may start to interact with an evolved packet core (EPC) enabled network by executing an E-UTRAN Attach procedure. In E-UTRAN the attach procedure comprises setup of a packet data network (PDN) connection which results in an activated default bearer.

Long Term Evolution (LTE) technology supports packet based services only, however 3GPP specifies fallback for circuit switched (CS) services as well. In LTE, the circuit switched fallback in EPS enables the provisioning of voice and traditional CS-domain services. To provide these services LTE reuses CS infrastructure when the UE 101 is served by E-UTRAN 103. A CS fallback enabled terminal, connected to E-UTRAN 103 may use GERAN 123 or UTRAN 125 to connect to the CS domain. Figure 2 illustrates embodiments of an Evolved Packet Service (EPS) architecture 200 for CS fallback and Short Message Service (SMS) over an SGs interface 240. The SGs interface is the reference point between the MME 105 and a Mobile Service Centre (MSC) server 227. The SGs interface is used for the mobility management and paging procedures between EPS and CS domain, and is based on the Gs interface procedures.

As part of the attach procedure the MME 105 may perform location updating of the UE 101 towards the MSC Server 227.

A location updating by the MSC Server 227 registers the UE 101 at a Home Location Register (HLR) 230. The registration at the HLR 230 makes it possible for the network to reach the UE 101 for mobile terminating SMS and/or mobile terminating voice calls.

In order to make a mobile terminated call, the network 100 should know the location of the user equipment 101 despite of its movement. For this purpose the user equipment 101 periodically reports its location to the network 100 using the Location Update procedure.

The location update procedure allows the user equipment 101 inform the network 100, whenever it moves from one location area to the next. The user equipments 101 are responsible for detecting location area codes. When a user equipment 101 finds that the location area code is different from its last update, it performs another update by sending to the network 100, a location update request, together with its previous location, and its Temporary Mobile Subscriber Identity (TMSI).

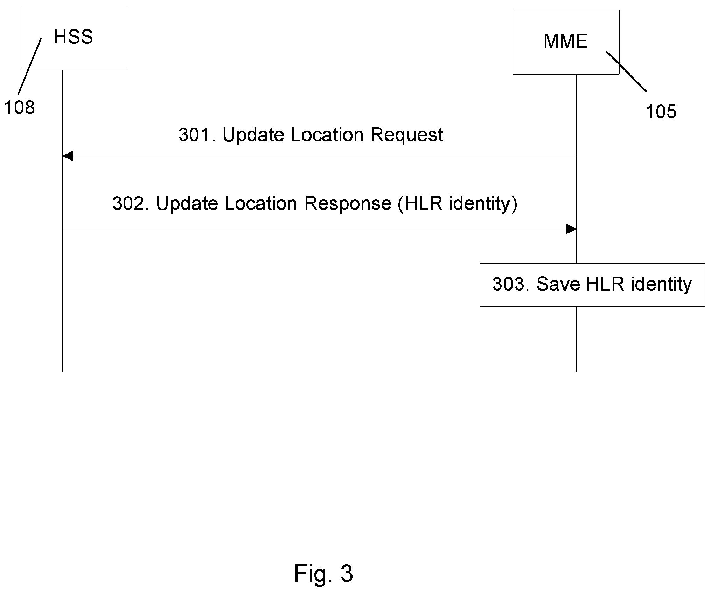

An embodiment for provide improved utilization of radio resources in a communication network will now be described with reference to the combined signaling diagram and flow chart depicted in Figure 3. The method comprises the following steps, which steps may as well be carried out in another suitable order than described below.

### Step 301

The MME 105 transmits an Update Location Request to the HSS 108.

The Location Update procedure may be performed when the user equipment 101 has been switched off and wants to become active, or when it is active but not involved in a call, and it moves from one location area to another, or after a regular time interval.

### Step 302

In the response to an Update Location Request, the HSS 108 provides the MME 105 with the HLR identity.

The HLR identity may be for example the International Mobile Subscriber Identity (IMSI) associated with the user equipment 101.

The HSS 108 may e. g. get to know the serving HLR through local configuration based on IMSI.

### Step 303

The MME 105 saves the HLR identity as part of the UE context. The HLR identity may be saved in an e.g. memory unit comprised in the MME 105.

By saving the HLR identity in the memory of the MME this may be used in further operation for improving utilization of radio resources as will be discussed below.

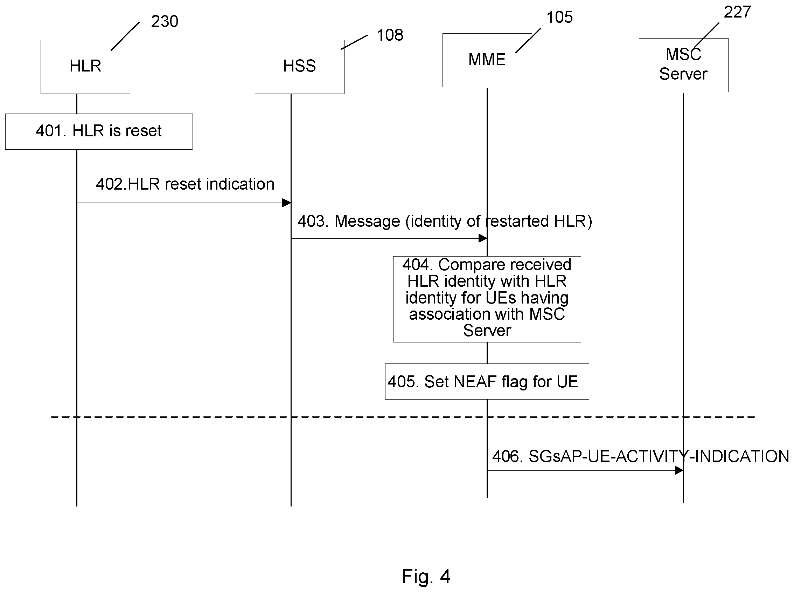

Another embodiment for providing improved utilization of radio resources in a communication network will now be described with reference to the combined signaling diagram and flowchart depicted in Figure 4. The method comprises the following steps, which steps may as well be carried out in another suitable order than described below.

### Step 401

The HLR 230 is reset. For example due to a restart or reset of the HLR.

### Step 402

The HLR 230 transmits an HLR reset indication to the HSS 108.

### Step 403

When the HSS has received the HLR reset indication from the HLR, the HSS sends only one message each to each impacted MMEs 105 via the S6a interface and where the message comprises the identity of the restarted/reset HLR 230.

The HLR identity may be for example the International Mobile Subscriber Identity (IMSI) associated with the user equipment 101.

### Step 403

The MME 105 compares the received HLR identity with the HLR identity saved for the UEs 101 that have an association with an MSC Server 227.

### Step 404

For each match in the comparing in step 403, the MME 105 sets an internal alert flag, e.g. a non-EPS alert flag (NEAF) for the UE 101.

### Step 404

At the next UE signaling event for a UE 101 where the NEAF is set, the MME sends an SGs Application Part (SGsAP)-UE-ACTIVITY-INDICATION to the associated MSC Server 227.

The SGsAP-UE-ACTIVITY-INDICATION is a message that is sent by the MME to indicate that activity from a UE 101 has been detected. The message may comprise the IMSI associated with the detected UE 101. Reset signaling is provided over an S6a interface 135 between the MME and the HSS.

With use of combined procedures in EPS, an MSC Server 227 that receives an HLR reset indication may signal the message SGsAP-RESET-INDICATION to trigger the MME 105 to set an internal flag VLR Reliable = False for each impacted UE 101. At next UE signaling event for a UE 101 where VLR Reliable = False, the MME 105 performs a location update, possibly preceded by an IMSI-detach to trigger the UE 101 to perform the combined RAU procedure, with IMSI attach.

As an alternative an MSC Server 227 that receives an HLR reset indication may signal the message SGsAP-ALERT-REQUEST, one for each and every impacted UE 101, to trigger the MME 105 to set an internal flag, non-EPS alert flag, NEAF for each impacted UE 105. At next UE signaling event for a UE 101 where the NEAF is set, the MME 105 sends an SGsAP-UE-ACTIVITY-INDICATION to impacted and associated MSC Server 227.

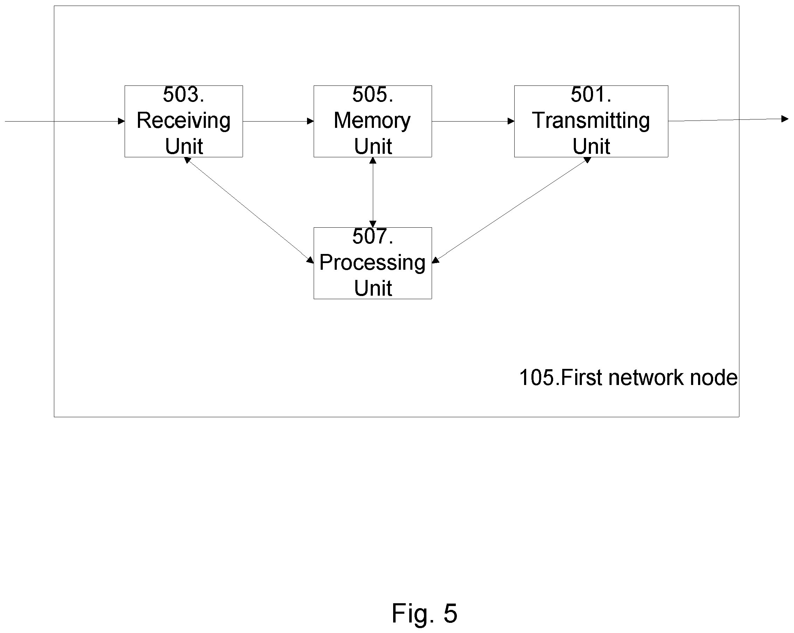

To perform the method steps shown in figures 3 and 4 a first network node, such as e.g. the MME 105, comprises an arrangement as shown in Figure 5. The first network node comprises a transmitting unit 501 configured to transmit a message to the second network node, e.g. the HSS 108. The message may be an Update Location Request.
In some embodiments, the transmitting unit 501 is further configured to send an SGs Application Part (SGsAP)-UE-ACTIVITY-INDICATION to the MSC Server 227. The SGsAP-UE-ACTIVITY-INDICATION is a message that is sent by the MME to indicate that activity from a UE 101 has been detected. The message may comprise the IMSI of the detected UE 101.

The first network node further comprises a receiving unit 503 configured to receive a reply message from the second network node. The message may comprise an HLR identity. The first network node further comprises a memory unit 505 configured to store the received HLR identity. The first network node further comprises a processing unit 507 configured to compare a received HLR identity with the HLR identity saved for the UEs 101 that have an association with an MSC Server 227. The processing unit 507 is further configured to, for each match in the comparing, to set a flag NEAF for each UE 101 with saved HLR identity and associated with an MSC server.

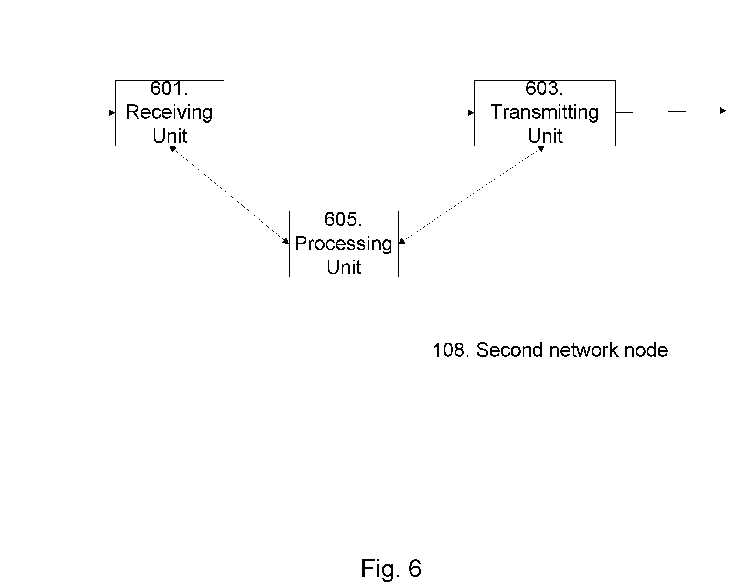

To perform the method steps shown in figures 3 and 4 a second network node, such as e.g. the HSS 108, comprises an arrangement as shown in Figure 6. The second network node comprises a receiving unit 601 configured to receive a message from the first network node, e.g. the MME. The message may be an Update Location Request. The receiving unit 601 may be further configured to receive an HLR reset indication from the HLR 230. The second network node may further comprise a transmitting unit 603 configured to transmit a message to the impacted MMEs 105 where the message comprises the identity of the restarted/reset HLR 230. The HLR identity may be for example the International Mobile Subscriber Identity (IMSI) associated with the user equipment 101.

The embodiments herein may be implemented through one or more processors, such as a processing unit 507 in the first network node depicted in Figure 5 and a processing unit 605 in the second network node depicted in Figure 6, together with computer program code for performing the functions of the embodiments herein. The processor may be for example a Digital Signal Processor (DSP), Application Specific Integrated Circuit (ASIC) processor, Field-programmable gate array (FPGA) processor or micro processor. The program code mentioned above may also be provided as a computer program product, for instance in the form of a data carrier carrying computer program code for performing the embodiments herein when being loaded into the first network node and/or second network node. One such carrier may be in the form of a CD ROM disc. It is however feasible with other data carriers such as a memory stick. The computer program code may furthermore be provided as pure program code on a server and downloaded to the first network node and/or second network node remotely.

The embodiments are not limited to the above described embodiments. Various alternatives, modifications and equivalents may be used. Therefore, the above embodiments should not be taken as limiting the scope of the embodiments.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

It should also be emphasized that the steps of the method may, without departing from the embodiments herein, be performed in another order than the order in which they appear.

## Claims

1. A mobility management entity, MME, (105) in a telecommunications network (100, 200), comprising
• a processing unit (507);
• a receiving unit (503);
• a transmitting unit (501);
• a memory unit (505);
**characterized in that**
the processing unit is arranged to execute instruction sets stored in the memory unit for:
• receiving on the receiving unit, from a Home Subscriber Server, HSS, (108) and over an S6a interface (135), a message comprising an identity of a reset home location register, HLR (230) wherein the received message is received in relation to an HLR reset indication;
• comparing the HLR identity with an in the memory unit saved list of HLR identities saved for user equipments, UEs, that have an association with a respective mobile service center, MSC, server (227);
• setting a flag for a UE associated with the reset HLR, the flag indicating an alert;
• receiving a UE signaling event for a UE with the flag set;
• sending in the transmitting unit an SGs application Part message to the respective MSC server (227) to indicate that activity from the UE has been detected.

2. The MME according to claim 1, wherein the processing unit is further arranged to send an update location request to the HSS (108), receive a HLR identity associated with the UE (101) from the HSS, and save the HLR identity as part of a UE context of said UE (101).

3. The MME according to claim 2, wherein the HLR identity associated with the UE is received from the HSS in relation to the update location request.

4. The MME according to any preceding claims, wherein the flag is one of a non-EPS alert flag, NEAF, or Visiting location register, VLR, Reliable set to False.

5. A method in a mobility management entity, MME, for providing improved utilization of radio resources in a telecommunications network (100, 200)
**characterized in that** the method comprise the steps of:
• Receiving, from a Home Subscriber Server, HSS, (108) and over an S6a interface (135), a message comprising an identity of a reset home location register, HLR (105), wherein the received message is received in relation to an HLR reset indication;
• comparing the HLR identity with an in a memory unit saved list of HLR identities saved for user equipments (101), UEs, that have an association with a respective mobile service center, MSC, server (227);
• setting a flag for a UE associated with the reset HLR, the flag indicating an alert;
• receiving a UE signaling event for a UE with the flag set;
• sending an SGs application Part message to the respective MSC server (227) to indicate that activity from the UE has been detected.

6. The method according to claim 5, further comprising steps of sending an update location request to the HSS (108), receiving a HLR identity associated with the UE (101) from the HSS, and saving the HLR identity as part of a UE context of said UE (101).

7. The method according to claim 5, wherein the flag is one of a non-EPS alert flag, NEAF, or Visiting location register, VLR, Reliable set to False.

8. A Home Subscriber Server (108), HSS, in a telecommunications network (100, 200), comprising
• a processing unit (605);
• a receiving unit (601);
• a transmitting unit (603);
**characterized in that**
the processing unit is arranged to execute instruction sets to:
• receive on the receiving unit, from a reset Home Location Register, HLR, (230) a message comprising an indication of an HLR reset;
• send, over a S6a interface, using the transmitting unit one message to each impacted mobility management entity (105), MME, with an in the memory unit saved list of HLR identities saved for user equipment, UE, and wherein the message comprises an identity of the reset HLR (230) associated with the UE;
wherein the processing unit is further arranged to, in response to receiving an update location request from an MME, provide an HLR identity associated with a User Equipment, UE, (101).

9. The HSS according to claim 8, wherein the HLR identity is a mobile subscriber identity, IMSI, associated with the user equipment (101), UE.

10. A method in a Home subscriber server (108), HSS, in a telecommunications network (100, 200),
**characterized in that** the method comprising steps of:
• Receiving, from a reset Home Location Register, HLR, (230) a message comprising an indication of an HLR (230) reset;
• Sending, over a S6a interface, one message to each impacted mobility management entity (105), MME, with an in the memory unit saved list of HLR identities saved for user equipment, UE, and wherein the message comprises an identity of the reset HLR (230) associated with the UE; and
• receiving an update location request from an MME and in response providing an HLR identity associated with a User Equipment, UE, (101).

## Patentansprüche

1. Mobilitätsverwaltungsinstanz, MME, (105) in einem Telekommunikationsnetz (100, 200), umfassend:
• eine Verarbeitungseinheit (507);
• eine Empfangseinheit (503);
• eine Sendeeinheit (501);
• eine Speichereinheit (505);
**dadurch gekennzeichnet, dass**
die Verarbeitungseinheit so ausgelegt ist, dass sie in der Speichereinheit gespeicherte Anweisungssätze ausführt zum:
• Empfangen an der Empfangseinheit einer Nachricht, die eine Kennung eines rückgesetzten Heimatregisters, HLR, (230) umfasst, von einem Heimat-Teilnehmerserver, HSS, (108) und über eine S6a-Schnittstelle (135), wobei die empfangene Nachricht in Bezug auf eine HLR-Rücksetzanzeige empfangen wird;
• Vergleichen der HLR-Kennung mit einer in der Speichereinheit gespeicherten Liste von HLR-Kennungen für Benutzereinrichtungen, UEs, die eine Assoziation mit einem jeweiligen Mobildienststellen, MSC,-Server (227) aufweisen;
• Setzen eines Flags für eine UE, die mit dem rückgesetzten HLR assoziiert ist, wobei das Flag einen Hinweis anzeigt;
• Empfangen eines UE-Signalisierungsereignisses für eine UE mit einem gesetzten Flag;
• Senden in der Sendeeinheit einer SGs-Anwendungsteil-Nachricht an den jeweiligen MSC-Server (227), um anzuzeigen, dass Aktivität von der UE erkannt wurde.

2. MME nach Anspruch 1, wobei die Verarbeitungseinheit ferner so ausgelegt ist, dass sie eine Standortaktualisierungsnachricht an den HSS (108) sendet, eine mit der UE (101) assoziierte HLR-Kennung vom HSS empfängt und die HLR-Kennung als Teil eines UE-Kontextes der UE (101) speichert.

3. MME nach Anspruch 1, wobei die mit der UE assoziierte HLR-Kennung vom HSS in Bezug auf die Standortaktualisierungsanforderung empfangen wird.

4. MME nach einem der vorhergehenden Ansprüche, wobei das Flag eines von einem Nicht-EPS-Hinweisflag, NEAF, oder Besucherregister, VLR,-zuverlässig-auf-falsch-gesetzt ist.

5. Verfahren in einer Mobilitätsverwaltungsinstanz, MME, zur Bereitstellung verbesserter Nutzung von Funkressourcen in einem Telekommunikationsnetz (100, 200), **dadurch gekennzeichnet, dass** das Verfahren die folgenden Schritte umfasst:
• Empfangen einer Nachricht, die eine Kennung eines rückgesetzten Heimatregisters, HLR, (105) umfasst, von einem Heimat-Teilnehmerserver, HSS, (108) und über eine S6a-Schnittstelle (135), wobei die empfangene Nachricht in Bezug auf eine HLR-Rücksetzanzeige empfangen wird;
• Vergleichen der HLR-Kennung mit einer in einer Speichereinheit gespeicherten Liste von HLR-Kennungen für Benutzereinrichtungen, UEs, (101), die eine Assoziation mit einem jeweiligen Mobildienststellen, MSC,-Server (227) aufweisen;
• Setzen eines Flags für eine UE, die mit dem rückgesetzten HLR assoziiert ist, wobei das Flag einen Hinweis anzeigt;
• Empfangen eines UE-Signalisierungsereignisses für eine UE mit einem gesetzten Flag;
• Senden einer SGs-Anwendungsteil-Nachricht an den jeweiligen MSC-Server (227), um anzuzeigen, dass Aktivität von der UE erkannt wurde.

6. Verfahren nach Anspruch 5, ferner umfassend die Schritte des Sendens einer Standortaktualisierungsnachricht an den HSS (108), Empfangens einer mit der UE (101) assoziierten HLR-Kennung vom HSS und Speicherns der HLR-Kennung als Teil eines UE-Kontextes der UE (101).

7. Verfahren nach Anspruch 5, wobei das Flag eines von einem Nicht-EPS-Hinweisflag, NEAF, oder Besucherregister, VLR,-zuverlässig-auf-falsch-gesetzt ist.

8. Heimat-Teilnehmerserver, HSS, (108) in einem Telekommunikationsnetz (100, 200), umfassend:
• eine Verarbeitungseinheit (605);
• eine Empfangseinheit (601);
• eine Sendeeinheit (603);
**dadurch gekennzeichnet, dass**
die Verarbeitungseinheit so ausgelegt ist, dass sie Anweisungssätze ausführt zum:
• Empfangen an der Empfangseinheit einer Nachricht, die eine Anzeige einer HLR-Rücksetzung umfasst, von einem rückgesetzten Heimatregister, HLR, (230);
• Senden über eine S6a-Schnittstelle unter Verwendung der Sendeeinheit einer Nachricht an jede betroffene Mobilitätsverwaltungsinstanz, MME, (105) mit einer in der Speichereinheit gespeicherten Liste von HLR-Kennungen, die für Benutzereinrichtungen, UEs, gespeichert werden, und wobei die Nachricht eine Kennung des rückgesetzten HLRs (230) umfasst, das mit der UE assoziiert ist;
wobei die Verarbeitungseinheit ferner so ausgelegt ist, dass sie in Reaktion auf den Empfang einer Standortaktualisierungsanforderung von einer MME eine HLR-Kennung bereitstellt, die mit der Benutzereinrichtung, UE, (101) assoziiert ist.

9. HSS nach Anspruch 8, wobei die HLR-Kennung eine Mobilteilnehmerkennung, IMSI, ist, die mit der Benutzereinrichtung, UE, (101) assoziiert ist.

10. Verfahren in einem Heimat-Teilnehmerserver, HSS, (108) in einem Telekommunikationsnetz (100, 200),
**dadurch gekennzeichnet, dass** das Verfahren die folgenden Schritte umfasst:
• Empfangen einer Nachricht, die eine Anzeige einer Rücksetzung eines HLRs (230) umfasst, von einem rückgesetzten Heimatregister, HLR, (230);
• Senden über eine S6a-Schnittstelle einer Nachricht an jede betroffene Mobilitätsverwaltungsinstanz, MME, (105) mit einer in der Speichereinheit gespeicherten Liste von HLR-Kennungen, die für Benutzereinrichtungen, UEs, gespeichert werden, und wobei die Nachricht eine Identität des rückgesetzten HLRs (230) umfasst, das mit der UE assoziiert ist; und
• Empfangen einer Standortaktualisierungsanforderung von einer MME und Bereitstellen in Reaktion darauf einer HLR-Kennung, die mit der Benutzereinrichtung, UE, (101) assoziiert ist.

## Revendications

1. Entité de gestion de mobilité, MME, (105) dans un réseau de télécommunications (100, 200), comprenant :
• une unité de traitement (507) ;
• une unité de réception (503) ;
• une unité de transmission (501) ;
• une unité de mémoire (505) ;
**caractérisée en ce que** l'unité de traitement est agencée pour exécuter des jeux d'instructions mémorisés dans l'unité de mémoire pour effectuer :
• la réception, sur l'unité de réception, en provenance d'un serveur d'abonné de rattachement, HSS, (108) et sur une interface S6a (135), d'un message comprenant une identité d'un registre d'emplacement de rattachement, HLR, (230) réinitialisé, dans laquelle le message reçu est reçu en relation avec une indication de réinitialisation de HLR ;
• la comparaison de l'identité de HLR à une liste, enregistrée dans l'unité de mémoire, d'identités de HLR enregistrées pour des équipements d'utilisateur, UE, qui ont une association avec un serveur de centre de service mobile, MSC, (227) respectif ;
• le réglage d'un drapeau pour un UE associé au HLR réinitialisé, le drapeau indiquant une alerte ;
• la réception d'un événement de signalisation d'UE pour un UE avec le drapeau réglé ;
• l'envoi, dans l'unité de transmission, d'un message de partie d'application de SG au serveur de MSC (227) respectif pour indiquer qu'une activité de l'UE a été détectée.

2. MME selon la revendication 1, dans laquelle l'unité de traitement est en outre agencée pour envoyer une demande de mise à jour d'emplacement au HSS (108), recevoir une identité de HLR associée à l'UE (101) en provenance du HSS, et enregistrer l'identité de HLR dans le cadre d'un contexte d'UE dudit UE (101).

3. MME selon la revendication 2, dans laquelle l'identité de HLR associée à l'UE est reçue en provenance du HSS en relation avec la demande de mise à jour d'emplacement.

4. MME selon l'une quelconque des revendications précédentes, dans laquelle le drapeau est l'un d'un drapeau d'alerte non-EPS, NEAF, ou d'un registre d'emplacement de visite, VLR, fiable réglé à faux.

5. Procédé dans une entité de gestion de mobilité, MME, pour fournir une utilisation améliorée de ressources radio dans un réseau de télécommunications (100, 200), **caractérisé en ce que** le procédé comprend les étapes de :
• la réception, en provenance d'un serveur d'abonné de rattachement, HSS, (108) et sur une interface S6a (135), d'un message comprenant une identité d'un registre d'emplacement de rattachement, HLR, (105) réinitialisé, dans lequel le message reçu est reçu en relation avec une indication de réinitialisation de HLR ;
• la comparaison de l'identité de HLR à une liste, enregistrée dans l'unité de mémoire, d'identités de HLR enregistrées pour des équipements d'utilisateur, UE, (101) qui ont une association avec un serveur de centre de service mobile, MSC, (227) respectif ;
• le réglage d'un drapeau pour un UE associé au HLR réinitialisé, le drapeau indiquant une alerte ;
• la réception d'un événement de signalisation d'UE pour un UE avec le drapeau réglé ; et
• l'envoi d'un message de partie d'application de SG au serveur de MSC (227) respectif pour indiquer qu'une activité de l'UE a été détectée.

6. Procédé selon la revendication 5, comprenant en outre les étapes de l'envoi d'une demande de mise à jour d'emplacement au HSS (108), la réception d'une identité de HLR associée à l'UE (101) en provenance du HSS, et l'enregistrement de l'identité de HLR dans le cadre d'un contexte d'UE dudit UE (101).

7. Procédé selon la revendication 5, dans lequel le drapeau est l'un d'un drapeau d'alerte non-EPS, NEAF, ou d'un registre d'emplacement de visite, VLR, fiable réglé à faux.

8. Serveur d'abonné de rattachement, HSS, (108) dans un réseau de télécommunications (100, 200), comprenant :
• une unité de traitement (605) ;
• une unité de réception (601) ;
• une unité de transmission (603) ;
**caractérisé en ce que** l'unité de traitement est agencée pour exécuter des jeux d'instructions pour effectuer :
• la réception, sur l'unité de réception, en provenance d'un registre d'emplacement de rattachement, HLR, (230) réinitialisé, d'un message comprenant une indication d'une réinitialisation de HLR ;
• l'envoi, sur une interface S6a, en utilisant l'unité de transmission, d'un message à chaque entité de gestion de mobilité, MME, (105) impactée, avec une liste, enregistrée dans l'unité de mémoire, d'identités de HLR enregistrées pour des équipements d'utilisateur, UE, et dans lequel le message comprend une identité du HLR (230) réinitialisé associé à l'UE ;
dans lequel l'unité de traitement est en outre agencée pour effectuer, en réponse à la réception d'une demande de mise à jour d'emplacement en provenance d'une MME, la fourniture d'une identité de HLR associée à un équipement d'utilisateur, UE, (101).

9. HSS selon la revendication 8, dans lequel l'identité de HLR est une identité d'abonné mobile, IMSI, associée à l'équipement d'utilisateur, UE, (101).

10. Procédé dans un serveur d'abonné de rattachement, HSS, (108) dans un réseau de télécommunications (100, 200), **caractérisé en ce que** le procédé comprend les étapes de :
• la réception, en provenance d'un registre d'emplacement de rattachement, HLR, (230) réinitialisé, d'un message comprenant une indication d'une réinitialisation de HLR (230) ;
• l'envoi, sur une interface S6a, d'un message à chaque entité de gestion de mobilité, MME, (105) impactée, avec une liste, enregistrée dans l'unité de mémoire, d'identités de HLR enregistrées pour des équipements d'utilisateur, UE, et dans lequel le message comprend une identité du HLR (230) réinitialisé associé à l'UE ; et
• la réception d'une demande de mise à jour d'emplacement en provenance d'une MME et, en réponse, la fourniture d'une identité de HLR associée à un équipement d'utilisateur, UE, (101).
